# EUROPEAN PATENT APPLICATION

(11) **EP 4 700 751 A1**
(43) Date of publication of application: **25.02.2026**
(21) Application number: 24793149.6
(22) Date of filing: 16.04.2024
(51) Int. Cl.: G09F 19/18, G06T 3/08, G06T 17/00

(54) **METHOD FOR CREATING PROJECTIONS ONTO SURFACES OF REAL-WORLD OBJECTS**

(30) Priority: 17.04.2023 RU 2023109720
(71) Applicant: Falcon IP-Chain Fzco, 60397 Dubai Silicon Oasis Dubai (AE)
(72) Inventor: GAINANOVA, Svetlana Tavabilevna, Henderson, NV 89052 (US); ALIMOV, Sergei Viktorovich, Woodburn, OR 97071 (US)
(74) Representative: Fleuchaus & Gallo Partnerschaft mbB
(86) International application number: PCT/RU2024/050083
(87) International publication number: WO 2024/219999

(57) **Abstract**

The invention relates to a method for creating undistorted projections onto the surfaces of real-world objects in the case of the artistic illumination of architectural buildings, structures and similar objects, as well as in the case of light marking at industrial facilities and on civilian objects. Said method includes performing geodetic measurements of an object and its spatial surroundings to create a vertical control network, performing a photographic survey or laser scanning of the real-world object onto which a projection is to be made and of objects in the spatial surroundings thereof, creating a 3D model of the real-world object, referencing the real-world object to a given system of coordinates during a rendering process, determining and calculating a projection zone, calculating the position of projectors, taking into account the location of objects in the spatial surroundings which would obstruct the path of projection beams from the projectors to the object onto which a projection is to be made, creating a model of a "source (projectors) - screen" system using the coordinates obtained in the 3D modelling process, transferring a projection image onto a gobo slide, installing projectors in accordance with the coordinates of virtual projectors in the 3D model of the real-world object, placing the slide with the image into a projector and projecting the image onto the surface of real-world objects.

## Description

### TECHNICAL FIELD TO WHICH THE INVENTION RELATES

The invention relates to a method for creating undistorted projections onto the surfaces of real objects in the case of the artistic illumination of architectural buildings, structures and similar objects, as well as in the case of light marking at industrial facilities and on civilian objects.

### TECHNICAL LEVEL

DE 102005034990 A1 discloses a method for projecting an image onto surfaces of real objects. The method involves using a plurality of projectors to project a plurality of digital images onto a projection surface (surfaces), with the projectors being tuned to different image planes, where 'image elements' - pixels are projected into areas of the projection surface(s) simultaneously from different projectors. With this method of display, all areas of the projection surfaces that can be illuminated by the projectors are automatically adjusted by an autofocus mechanism to optimal sharpness after calibration to correct geometry and color and to determine sharpness values and the appropriate transformation when manipulating intensities to be corrected. In this case, going through calibration is a long and complex process, and the image on the surface is ultimately not completely realistic.

RU 2433487 (published 10 November 2011, Patent Bulletin No. 31) discloses a method for projecting an image of three-dimensional objects onto the surface of real objects by measuring and/or shooting and/or laser scanning of the real objects, on the surface of which this image is to projected, calculating the position of projectors, light sources and viewers relative to the real objects. In this method, 3D models of real and virtual objects are created and textured, and a virtual scene is constructed, including virtual light sources, virtual projectors and 3D models of real objects whose location is identical to the location of the real objects, the light sources and the projectors, and 3D models of virtual objects. Programming of visualization of the virtual scene is carried out from the point of view of the viewer's location in real time, programming of displaying the obtained image on the surface of the models of real objects in real time, programming of visualization of the resulting scene from the point of view of the location of the projectors in real time, programming of the interactive part and the scenario of behavior of the models. Then, the projectors are arranged in the real environment identically to the virtual scene and the obtained images are displayed by means of the real projectors on the surface of the real objects. In some cases, due to inaccuracies in the initial measurements or in the calibration of the projectors, it is necessary to adjust (reset) the projectors in the real environment. After the projectors are positioned in the real environment, the projected image is additionally corrected to take account of the projectors' positioning by editing the 3D models of the real objects. In case of difficulties in superimposing the final video image on the real objects due to the inaccuracies in the initial measurements or in the calibration of the projectors, the projectors are adjusted in the real environment by adjusting the projected image using a 3D model editing tool.

The complexity of the above method is caused by the duration of adjustment and determination of the position of the projectors due to the fact that their position is determined by a virtual 3D model of objects and transferring the location points of the projectors in the virtual model to the real object requires numerous iterations in search of the optimal location, and sometimes adjusting the projected image taking into account the placement of the projectors by editing the 3D models of real objects. The digital projectors (RU 2433487, FIGs. 3-5) do not allow projecting an image by avoiding places where lighting is undesirable (windows, galleries, apertures, etc.). The design of the video projectors does not imply their use in the open space except for taking additional measures to protect them from the effects of weather conditions - they are most often installed inside a building or under a canopy, which significantly limits the choice of locations for their installation.

The prior art discloses ways of projecting images onto the surface of real objects, which uses so-called gobo-projectors - street projectors in the form of a small LED device projecting the image of a gobo-slide onto any, preferably flat surface, such as an asphalt pavement, a building wall, a floor in a shopping center, etc. The gobo-slide of the projector is usually a thin disk of heat-resistant, dichroic glass with a laser engraved image, which is installed in front of the light source (Goes Before Optics - GOBO).

RU 2667346 (published 18 September 2018, Patent Bulletin No. 26) discloses a method for projecting an image onto the surfaces of real objects, which involves determining a projection area and an approximate location of a gobo-projector and calibrating the projector with a calibration gobo-slide such that the gobo-slide with reference points is inserted and projected, whereupon a projection size and focus are adjusted. After setting the value of the opening angle and focus, the distance from the gobo-projector to the extreme points of the projection is measured, the projection of the calibration gobo is photographed from the place of installation of the gobo-projector and/or from the point of view of the projection, the distortion of the projection is calculated, a primary template is created in a graphic editor based on the photograph of the projection of the calibration gobo by removing, from the image of the template, all graphic information except that which is in the projection area. Then, the projection area is distorted to ensure the possibility of linking the image to the reference points of the projection of the calibration gobo. If necessary, the primary template is divided into the main template of the projected image and the mask template of the light flux cutoff from the areas where light should not fall. After that, the main template is overlaid with the image for projection and, if necessary, the light flux cutoff zones are marked on the mask template, and the main template with the image and the mask template with the light flux cutoff zones are distorted in accordance with the original geometry and dimensions of the calibration gobo. Next, a gobo-slide is created from the main template with the image with non-illuminated zones for cutting off the light flux. The gobo-slide is installed in the gobo-projector, the gobo-projector is directed and adjusted in accordance with the settings made earlier, the gobo with the image and the gobo-mask are adjusted relative to the axis of the light flux, and the focus of the projected image is adjusted by shifting and tilting lenses.

The above method for creating the gobo-slide is rather labor-intensive, it requires a large amount of manual labor to adjust the projectors, to perform the necessary measurements and calculations, to create the primary template first and then the main template and the cut-off mask template, to create and use the calibration gobo and, in some cases, a repeated set of works to determine the new location of the projectors and their adjustment.

### SUMMARY OF THE INVENTION

The object of the claimed method is to ensure its manufacturability by reducing the labor intensity of the process of creating undistorted projections on the surface of real objects.

The technical result of the claimed invention is to reduce the labor intensity of the method for creating undistorted projections on the surface of real objects by: creating a three-dimensional digital model (3D model) of the object and its spatial environment with the given actual coordinates without creating an additional virtual model of the object; post-field processing of projection scenarios taking into account the location of objects in the spatial environment which prevent the passage of the projection rays of a light flow from the projector (projectors) to the object; determining the optimal location of installation of the projector (projectors) by modeling and comparing projection variants without further additional adjustments at the place of installation of projection sources; and creating a main image template and, if necessary, a mask template, a final gobo-slide.

The technical result is achieved by the claimed method, which includes: performing preliminary geodetic measurements of a real object and its spatial environment to create a vertical control network in which each point of the scanning object is tied to a coordinate system; performing a photographic survey of the real object onto which a projection is to be made and its spatial environment to determine subsequently the location of installation of projectors, taking into account the location of objects that prevent the projection; and creating a three-dimensional digital model (3D model) of the projection object in a given coordinate system, making the necessary calculations on its basis to obtain an undistorted image and determining the optimal locations of installation of the projectors. A model of the "source (projector)-screen" system is created based on the coordinates obtained in the process of working with the 3D model.

Depending on the composition of the object onto which the projection is to be made, photogrammetry or laser scanning is used to collect the necessary amount of information about the object and its spatial environment. Information about the projection object is linked to the given coordinate system using software products such as, for example, ContextCapture or Metashape for photogrammetry or Trimble Business Center for laser scanning. The three-dimensional digital model (3D model) is created in the specified coordinate system to determine the coordinates of the projector and the projection plane in the adopted coordinate system without having to create an additional virtual model. Building the 3D model of the real object using the photogrammetry technology, when a raster model is created on the basis of pixels from photo images, or the laser scanning technology, when the model is created on the basis of point clouds obtained by means of a laser beam reflected from the object surface, is carried out based on software such as ContextCapture, Metashape, Trimble Business Center, depending on the applied equipment, for example, digital cameras, quadrocopters, laser scanners, while involving identifications obtained based on geodetic measurements.

The digital 3D model, taking into account the use of ground control points and coordinates of the centers of photography from cameras (GPS), is an exact digital copy of the real object, which allows one to perform any necessary measurements of the object without repeated trips to the location of the real object.

For each scenario of image projection at different places of projectors' placement, virtual image projection is performed, lighting calculation is performed, distortion of the projection picture is fixed to form a future undistorted projection on the surface of the real object, computer processing of the obtained results is performed and, as a result, a view of the final image is created for its further transfer to the gobo-slide.

The distorted image of the future projection is created in the three-dimensional digital model in a post-field manner. As a result, an image of the projection is obtained and, if necessary, a light flux cutoff zone is formed for further production of the gobo-slide and the gobo-mask based on, for example, borosilicate dichroic glass.

Directly on the real object only the projector is mounted in accordance with the coordinates of the projector installation location in the 3D model, the prepared slide and, if necessary, the gobo-mask are installed in it, and then the device is adjusted.

Using this method significantly reduces the labor intensity of the process of creating undistorted projections on the surfaces of real objects due to the fact that all operations on virtual installation of the projector, determining the location of projection, modeling the light flux depending on the power of the projector and its optics, determining the presence of obstacles in its path, possible changes in the location of the projector, fixing distortions, determining the necessary parameters, processing all the information are carried out in a post-field manner, without additional trips to the location of the real object. When working with the 3D model in a post-field manner, there is no need to apply calibration gobos, all editing is done in the process of working with the program. A viewer is not bound to a certain place for contemplating the projection and is not restricted in freedom of movement.

The method allows one to carry out virtual projection of a light flux with display of a light spot on a surface (place) of projection in the 3D model of the real object from the chosen (optimal) location of the projector according to the results of only lighting calculation without additional trips to the location of the real object, as well as to process the fixed distortions of the light spot on the surface of projection with the help of a software product for transfer of distortion parameters to the image of the future projection (reverse distortion of the original image), create the slide, for example, from borosilicate dichroic glass according to the parameters of virtual distortion of the original image to install it in the projector and mount the projector in exact accordance with the coordinates of the virtual projector in the 3D model of the real object.

One of the variants of application of the claimed method is its use for light demarcation both for static images and for images moving after moving cargoes and moving mechanisms (active demarcation), when image projection is carried out with the help of projectors installed on the moving mechanisms, at unchanged distance from the projector to the projection surface.

### IMPLEMENTATION OF THE INVENTION

The method is carried out as follows. With the help of geodetic equipment, a vertical control network is created, in which each scanning point of an object is tied to a coordinate system and serves to tie a future digital 3D model to the real object. A raster model of the real object is created based on pixels from photo images or with the help of laser scanning technology, when the model is created based on point clouds obtained with the help of a laser beam reflected from the object surface.

Software, such as ContextCapture, Metashape, Trimble Business Center, is used to: build the 3D model of the object, which is an exact digital copy of a real object and allows one to make any necessary measurements of the object virtually, in a system of real coordinates without additional visits to the site; build a digital model of the spatial environment; edit reality models and digital terrain models consisting of hundreds of millions of triangles or point clouds; import, retouch and export the reality models in various formats; and move the data to the best formats for processing.

For each visualization scenario, a virtual projection of the image is performed, a lighting calculation is made, the distortion of the projection image is recorded, computer processing of the obtained results is performed and a view of the final image is created for its further transfer to a gobo-slide. The distorted image of the future projection is created in the three-dimensional digital model in a post-field manner. As a result, the main image of the projection is obtained and, if necessary, a light flux cutoff zone is formed for the subsequent production of the slide and a gobo-mask based on, for example, borosilicate dichroic glass.

The projector installation location is modeled in the 3D model, a virtual visualization of the light flux projection from the projector is created depending on the power of the projector and its optics installed on surfaces that are fundamentally suitable for this in the spatial environment of the projection object to a given projection location. As the optimal option is determined (no obstacles in the path of the light flux, compliance with the requirement for the minimum possible angle of inclination of the light flux for comfortable perception of the image by viewers, the closest (within reasonable limits) location of the projector from the projection location), the projector installation location is fixed, with its binding to the 3D model coordinates. To perform lighting calculations, track beam trajectories and calculate their interactions with objects lying on the trajectories, and calculate geometric optics problems, software products such as ZEMAX and DIALUX software packages are used, which allow modeling and analyzing various optical systems, creating a model of the "source (projector) - screen" system based on the coordinates obtained when creating the 3D model. A uniform grid of points is created on the screen, the size of which corresponds to the size of the image. Based on the calculation results, two text files are created: one with the coordinates of the uniform grid in the gobo-mask in the virtual projection, and the other with the coordinates of the distorted grid.

Directly on the real object, only the installation of the projector is carried out in accordance with the coordinates of the projector installation location in the 3D model, whereupon the prepared slide and, if necessary, the gobo-mask are installed in it, and the projectors are then adjusted.

## Claims

1. A digital method for creating an undistorted image on a surface of real objects, comprising: shooting or laser scanning of a real object onto which projection is to be performed; creating a 3D model of the real object; defining and calculating a projection zone; calculating a position of projectors; transferring a projection image to a gobo-slide;
mounting the projectors on site; installing the slide with the projection image in the projector; projecting the projection image onto the surface of the real objects, **characterized in that** the method further comprises: performing geodetic measurement of the real object and a spatial environment to create a vertical control network; performing photogrammetry or laser scanning of objects in the spatial environment of the real object; and when rendering, linking the real object to a given coordinate system; wherein the position of the projectors is calculated based on a location of the objects in the spatial environment that obstruct a passage of projection rays from the projectors to the projection object; wherein coordinates obtained when working with the 3D model are used to create a model of a "source (projectors) - screen" system is created; and wherein the projectors are mounted in accordance with the coordinates of virtual projectors in the 3D model of the real object.

2. The method of claim 1, further comprising installing a gobo-mask in the projector.

## Amended claims

### Amended claims under Art. 19.1 PCT

1. A digital method for creating an undistorted image on a surface of real objects, comprising: shooting or laser scanning of a real object onto which projection is to be performed; creating a 3D model of the real object; modeling projection scenarios taking into account a spatial environment of the real objects; determining and calculating a projection zone; calculating a position of projectors; transferring a projection image to a gobo-slide; mounting the projectors on site; installing the slide with the image in the projector; and projecting the image onto the surface of the real objects; **characterized in that** the projection scenarios are modeled in accordance with selected coordinates of virtual projectors; wherein, when performing a virtual projection, a lighting calculation is performed, and distortions of the projection image are recorded; wherein to transfer the projection image to the gobo-slide, a distorted image is formed, taking into account a minimum angle of inclination of a light flux, by software processing of the measured and recorded distortion parameters for each image projection scenario at different locations of a virtual placement of the projectors; and wherein the projectors are mounted on site in accordance with the selected coordinates of the virtual projectors in the 3D model of the real object.
